# EUROPEAN PATENT APPLICATION

(11) **EP 4 714 625 A1**
(43) Date of publication of application: **25.03.2026**
(21) Application number: 24831344.7
(22) Date of filing: 15.03.2024
(51) Int. Cl.: B29B 9/06, B29B 7/38, B29B 7/58, B29B 7/72, B29C 48/05, B29C 48/25, B29C 48/88, B29C 48/92, B29C 48/345

(54) **PELLET MANUFACTURING DEVICE AND PELLET MANUFACTURING METHOD**

(30) Priority: 29.06.2023 JP 2023107413
(71) Applicant: The Japan Steel Works, Ltd., Tokyo 141-0032 (JP)
(72) Inventor: ISHIGURO, Ryo, Tokyo 141-0032 (JP); KIMURA, Koichi, Tokyo 141-0032 (JP)
(74) Representative: Simmons & Simmons LLP (Munich)
(86) International application number: PCT/JP2024/010354
(87) International publication number: WO 2025/004467

(57) **Abstract**

In a preparation stage before starting to manufacture pellets, variation in a diameter of a strand is suppressed. A pellet manufacturing apparatus 10 includes an extrusion unit 20, a gripping unit 42, a moving unit 50, and a strand cutter 56. The extrusion unit 20 extrudes a molten resin R as a string-like strand S. The gripping unit 42 grips the strand S extruded from the extrusion unit 20. The moving unit 50 moves the gripping unit 42. The strand cutter 56 cuts the strand S conveyed by the movement of the gripping unit 42.

## Description

### TECHNICAL FIELD

This disclosure relates to a pellet manufacturing apparatus and a pellet manufacturing method.

### BACKGROUND ART

Patent Document 1 discloses a pellet manufacturing apparatus. A strand discharged from a die is solidified in a cooling bath and then sent to a strand cutter to be cut.

### RELATED ART DOCUMENTS

### PATENT DOCUMENTS

Patent Document 1: Japanese Unexamined Patent Application Publication No. 2022-134497

### SUMMARY OF THE INVENTION

### PROBLEMS TO BE SOLVED BY THE INVENTION

Patent Document 1 does not disclose a configuration for making a tip of a strand reach a strand cutter in a preparation stage before starting to manufacture pellets. When a user manually carries the strand to the strand cutter and then starts the manufacture, the magnitude of the external force acting on the strand varies depending on the user's skill, which may result in variation in the strand diameter. For this reason, there is room for improvement in the handling of the strand in the preparation stage before starting to manufacture pellets.

This disclosure has been made to solve such a problem, and an object thereof is to suppress the variation in strand diameter in the preparation stage before starting to manufacture pellets.

### MEANS FOR SOLVING THE PROBLEMS

In a pellet manufacturing apparatus according to one embodiment, a gripping unit grips a strand extruded from an extrusion unit. A moving unit moves the gripping unit.

A pellet manufacturing method according to one embodiment includes a step of gripping a strand extruded from an extrusion unit by a gripping unit, and a step of moving the strand to a cutting unit by moving the gripping unit by a moving unit.

### EFFECTS OF THE INVENTION

With the pellet manufacturing apparatus according to this disclosure, it is possible to suppress the variation in strand diameter in the preparation stage before starting to manufacture pellets.

With the pellet manufacturing method according to this disclosure, it is possible to suppress the variation in strand diameter in the preparation stage before starting to manufacture pellets.

### BRIEF DESCRIPTIONS OF THE DRAWINGS

[FIG. 1] is a front view illustrating a pellet manufacturing apparatus according to one embodiment of this disclosure.
[FIG. 2] is a block diagram of the pellet manufacturing apparatus in FIG. 1.
[FIG. 3] is a front view illustrating a state in which pellets are manufactured using the pellet manufacturing apparatus in FIG. 1.
[FIG. 4] is a plan view illustrating a state in which a molten resin is extruded from a die of the pellet manufacturing apparatus in FIG. 1 to be formed into strands.
[FIG. 5] is a front view illustrating a conveyance unit of the pellet manufacturing apparatus in FIG. 1 in an enlarged manner.
[FIG. 6] is a front view illustrating an upstream support section of the pellet manufacturing apparatus in FIG. 1 in an enlarged manner.
[FIG. 7] is a front view illustrating a downstream support section of the pellet manufacturing apparatus in FIG. 1 in an enlarged manner.
[FIG. 8] is a front view illustrating a state in which an operation check before starting to manufacture pellets is performed in the pellet manufacturing apparatus in FIG. 1.
[FIG. 9] is a front view illustrating a state in which an operation of conveying a strand before starting to manufacture pellets is started in the pellet manufacturing apparatus in FIG. 1.
[FIG. 10] is a front view illustrating a state in the middle of the operation of conveying the strand before starting to manufacture pellets in the pellet manufacturing apparatus in FIG. 1.
[FIG. 11] is a front view illustrating a state in which the operation of conveying the strand is finished in the pellet manufacturing apparatus in FIG. 1.
[FIG. 12] is a front view illustrating a pellet manufacturing apparatus according to a first modification.
[FIG. 13] is a cross-sectional view illustrating a conveyance unit of a pellet manufacturing apparatus according to a second modification.

### DETAILED DESCRIPTION OF PREFERRED EMBODIMENTS

Hereinafter, an embodiment will be described in detail with reference to the drawings. Note that the members having the same function are denoted by the same reference numerals, and the repetitive descriptions thereof will be omitted.

### [Configuration of Pellet Manufacturing Apparatus]

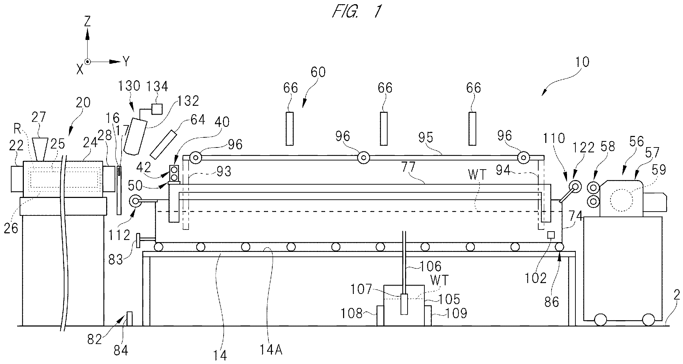

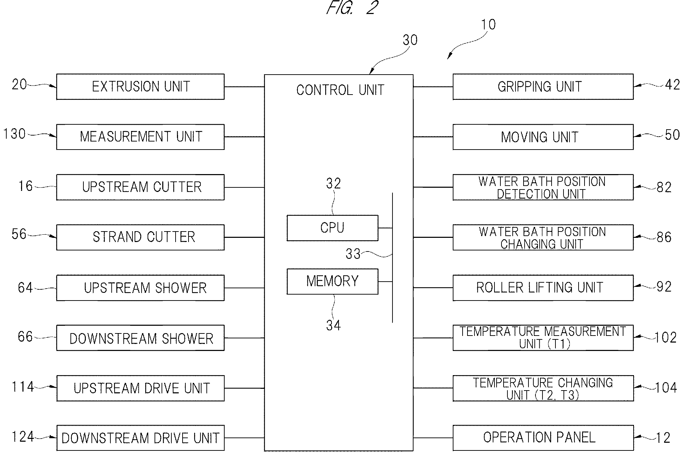

FIG. 1 illustrates a pellet manufacturing apparatus 10 according to this embodiment. FIG. 2 illustrates a block diagram of each component of the pellet manufacturing apparatus 10. As illustrated in FIG. 1, the pellet manufacturing apparatus 10 is installed on a floor surface 2 of a factory. In the following, each direction will be defined and the arrangement of each component will be described assuming that the floor surface 2 is a horizontal plane. A pedestal 14 described later is provided on the floor surface 2. The pedestal 14 has an upper surface 14A.

As illustrated in FIG. 2, the pellet manufacturing apparatus 10 includes an extrusion unit 20, a control unit 30, a gripping unit 42, a moving unit 50, and a strand cutter 56. In addition, the pellet manufacturing apparatus 10 includes an operation panel 12, an upstream cutter 16, a cooling unit 60 (FIG. 1), a water bath position detection unit 82, a water bath position changing unit 86, a support unit 110 (FIG. 1), and a measurement unit 130. Note that the configuration other than those illustrated in FIG. 2 will be described later.

The operation start, operation stop, and operation setting of the pellet manufacturing apparatus 10 are controlled by the user operating the operation panel 12. The operation panel 12 is, for example, a touch panel, with which information can be input and displayed.

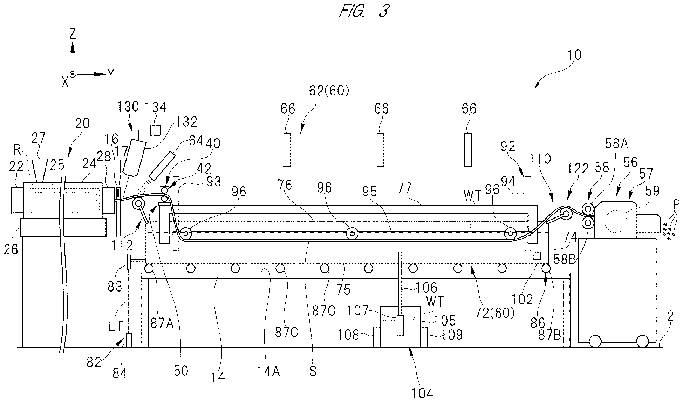

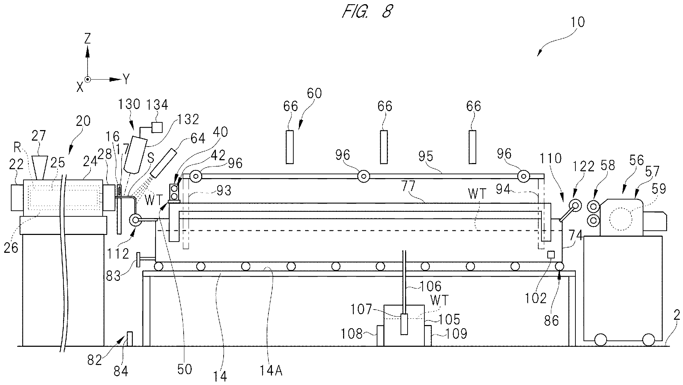

As illustrated in FIG. 8, in the pellet manufacturing apparatus 10, preliminary extrusion of a strand S is performed as one of the preparation stages before starting to manufacture pellets P (FIG. 3). Note that the preliminary extrusion of the strand S will be described later.

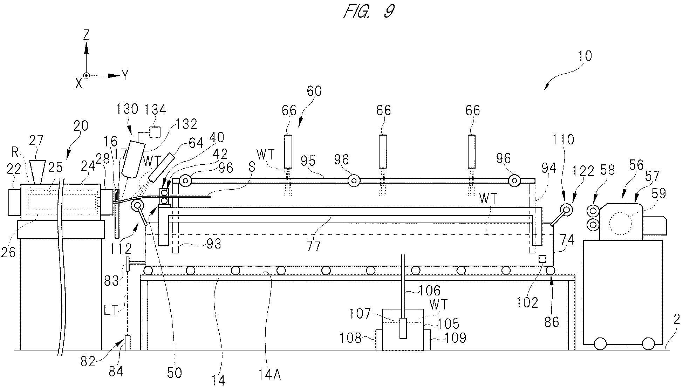

As illustrated in FIG. 9, in the pellet manufacturing apparatus 10, as one of the preparation stages before starting to manufacture the pellets P, the strand S extruded from the extrusion unit 20 is cooled by the cooling unit 60 and conveyed to the strand cutter 56 by the gripping unit 42 and the moving unit 50. Note that the conveyance of the strand S by the gripping unit 42 and the moving unit 50 is performed after the preliminary extrusion of the strand S has been performed.

As illustrated in FIG. 3, when the manufacture of the pellets P is started in the pellet manufacturing apparatus 10, the strand S extruded from the extrusion unit 20 is conveyed while being cooled by the cooling unit 60, and the pellets P are formed by cutting the strand S by the strand cutter 56. In this way, the manufacture of the pellets P using the pellet manufacturing apparatus 10 includes two stages such as a preparation stage before manufacture and a manufacturing stage.

In the following description of the pellet manufacturing apparatus 10, the horizontal direction from the extrusion unit 20 toward the strand cutter 56 is defined as the Y direction. The vertical direction perpendicular to the Y direction is defined as the Z direction. The direction perpendicular to both the Y direction and the Z direction is defined as the X direction.

The Y direction is an example of a conveyance direction of the strand S. The X direction is an example of a crossing direction intersecting the Y direction. The tip side of the arrow Y corresponds to the downstream side of the conveyance direction of the strand S. The base end side of the arrow Y corresponds to the upstream side of the conveyance direction of the strand S. The tip side of the arrow Z corresponds to the upper side in the vertical direction. The base end side of the arrow Z corresponds to the lower side in the vertical direction. The tip side of the arrow X corresponds to the front side of the pellet manufacturing apparatus 10. The base end side of the arrow X corresponds to the rear side of the pellet manufacturing apparatus 10. The specific configuration of the pellet manufacturing apparatus 10 will be described below.

### <Extrusion Unit>

As illustrated in FIG. 1, the extrusion unit 20 includes a drive unit 22, a cylinder 24, an inlet unit 27, a die 28, and an upstream cutter 16. The drive unit 22 is configured to include, for example, a motor and a decelerator. The cylinder 24 is a hollow member extending in the Y direction as its axial direction. A screw 25 is provided in the hollow portion of the cylinder 24, and a heater 26 is provided on the outer surface or inside the cylinder. The screw 25 is disposed to extend in the Y direction as its axial direction, and is rotated by the drive unit 22. The number of screws 25 may be either one or more.

The inlet unit 27 is connected to the inside of the cylinder 24. A resin material that is a raw material of the pellets P (FIG. 3) is fed to the inlet unit 27. For example, a thermoplastic resin can be used as the resin material. As the thermoplastic resin, for example, polyethylene, polypropylene, polyamide, polyethylene terephthalate, polyimide, polyether ether ketone, polystyrene, polyvinyl chloride, polycarbonate, polymethyl methacrylate, acrylonitrile-butadiene-styrene resin, polybutylene terephthalate resin, and biodegradable resins (PLA, PBS, PBAT) may be used. These resins can be used alone or as a mixture of multiple types.

The operation of the extrusion unit 20 is controlled by the control unit 30 (FIG. 2) described later. The raw material fed into the cylinder 24 is kneaded by the rotation of the screw 25 and melted by receiving the heat from the heater 26. The molten resin material (hereinafter referred to as molten resin R) is conveyed to the die 28.

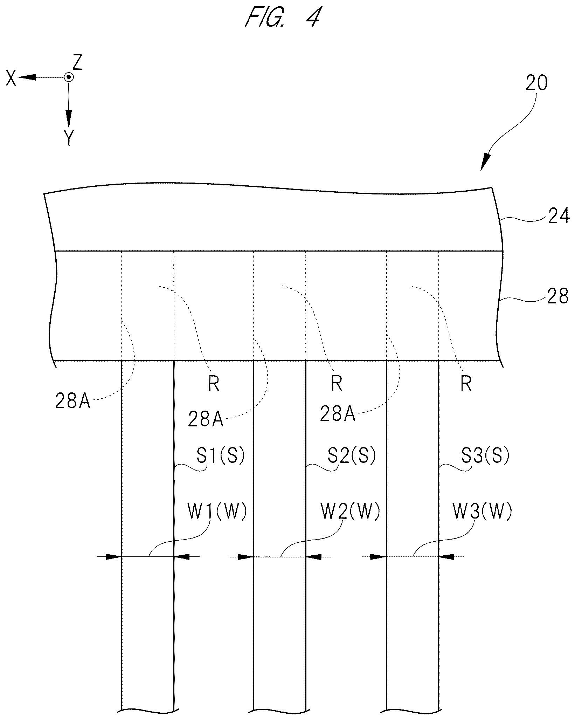

As illustrated in FIG. 4, the die 28 has a plurality of through holes 28A spaced apart in the X direction. The molten resin R is extruded from the through holes 28A to become string-like strands S. In other words, the extrusion unit 20 extrudes the molten resin R as string-like strands S. Note that FIG. 4 illustrates three strands S (S1, S2, S3) extruded from the extrusion unit 20 as an example. As viewed from above in the Z direction, an X-direction diameter of the strand S1 is W1, an X-direction diameter of the strand S2 is W2, and an X-direction diameter of the strand S3 is W3. The respective sizes of diameters W1, W2, and W3 are measured by the measurement unit 130 (FIG. 2) described later.

### <Control Unit>

As illustrated in FIG. 2, the control unit 30 is a personal computer, and includes a central processing unit (CPU) 32 and a memory 34. The CPU 32 and the memory 34 are connected to a common bus 33. The CPU 32 executes a program stored in the memory 34, thereby realizing various types of processes of the pellet manufacturing apparatus 10.

The control unit 30 can transmit information to and receive information from the operation panel 12, the upstream cutter 16, the extrusion unit 20, the gripping unit 42, the moving unit 50, the strand cutter 56, an upstream shower 64, a downstream shower 66, the water bath position detection unit 82, and the water bath position changing unit 86. Furthermore, the control unit 30 can transmit information to and receive information from a roller lifting unit 92, a temperature measurement unit 102, a temperature changing unit 104, an upstream drive unit 114, a downstream drive unit 124, and the measurement unit 130.

### <Gripping Unit>

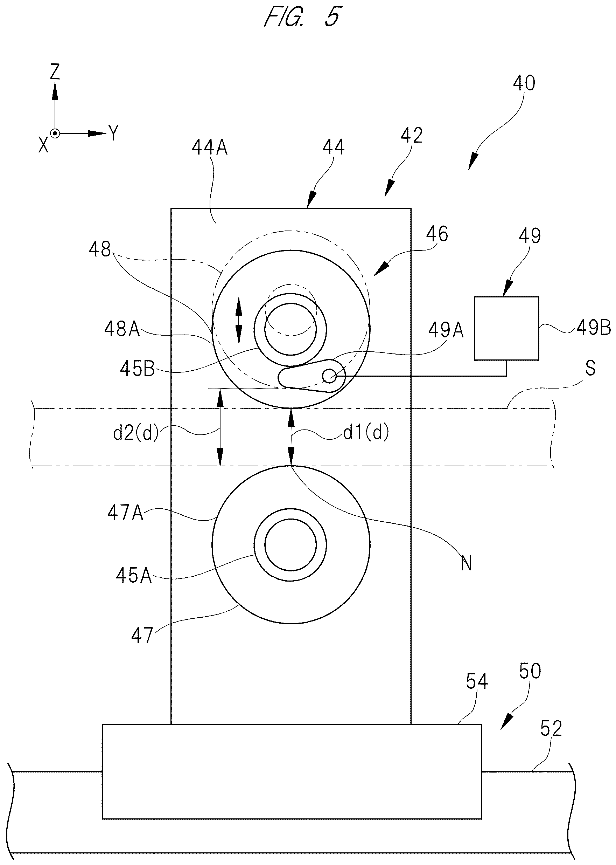

As illustrated in FIG. 5, the gripping unit 42 has a support frame 44, bearings 45A and 45B, a roller pair 46, and a bearing drive unit 49. The support frame 44 has a vertical wall portion 44A that stands upright in the Z direction. Two vertical wall portions 44A are provided at an interval therebetween in the X direction. Note that FIG. 5 illustrates one vertical wall portion 44A. The bearing 45A is fixed to the vertical wall portion 44A. The bearing 45B is provided on the vertical wall portion 44A so as to be movable upward and downward in the Z direction. The bearing 45B is located above the bearing 45A in the Z direction.

The roller pair 46 includes a lower roller 47 and an upper roller 48. The lower roller 47 is disposed to extend in the X direction as its axial direction. Both ends of the lower roller 47 in the X direction are rotatably supported by the bearings 45A. The lower roller 47 has an outer peripheral surface 47A. The upper roller 48 is disposed to extend in the X direction as its axial direction. Both ends of the upper roller 48 in the X direction are rotatably supported by the bearings 45B. The upper roller 48 has an outer peripheral surface 48A. The lower roller 47 and the upper roller 48 are both driven rollers that are not driven to rotate by a motor. The distance between the part of the outer peripheral surface 47A that is located at the uppermost end in the Z direction and the part of the outer peripheral surface 48A that is located at the lowermost end in the Z direction is defined as a nip distance d. Also, the part of the roller pair 46 where the nip distance d is obtained is defined as a nip portion N.

The bearing drive unit 49 includes, for example, a cam 49A and a motor 49B that rotates the cam 49A. The cam 49A is rotatably mounted on the vertical wall portion 44A. A part of the cam 49A supports the bearing 45B. The operation of the motor 49B is controlled by the control unit 30 (FIG. 2). The bearing 45B is configured to move upward or downward along the Z direction by changing the rotation angle of the cam 49A. In other words, by the bearing drive unit 49 driving the bearing 45B, the upper roller 48 can move upward or downward in the Z direction. Further, the nip distance d can be changed by moving the upper roller 48 upward or downward in the Z direction.

The nip distance d includes, for example, a nip distance d1 when the strand S is pinched between the lower roller 47 and the upper roller 48 and a nip distance d2 (> d1) when the upper roller 48 is separated from the strand S. The nip distance d1 and the nip distance d2 are set in the control unit 30 (FIG. 2) in advance. The nip distance d1 is set in advance such that the pressure force acting on the strand S in the Z direction is within an allowable range when the roller pair 46 is pinching the strand S. In other words, the nip distance d1 is set in advance such that the deformation of the strand S is within an allowable range. Furthermore, the nip distance d1 is set in advance such that a force (conveying force) that pulls the strand S toward the downstream side in the Y direction acts on the strand S when the moving unit 50 moves.

Pinching the strand S between the roller pair 46 falls within the meaning that "the strand S is gripped by the gripping unit 42." In other words, the gripping unit 42 grips the strand S extruded from the extrusion unit 20 (FIG. 1).

### <Moving Unit>

As illustrated in FIG. 5, the moving unit 50 is provided on a support frame 77 (FIG. 1) described later. As an example, the moving unit 50 is configured as an electric linear actuator. The moving unit 50 includes a guide rail 52 and a carriage 54. The guide rail 52 extends in the Y direction. The carriage 54 is guided by the guide rail 52, thereby enabling reciprocating movement along the Y direction. The vertical wall portion 44A is fixed to the carriage 54. Accordingly, the moving unit 50 supports the gripping unit 42 so as to be movable in the Y direction. The operation of the moving unit 50 is controlled by the control unit 30 (FIG. 2).

Here, the gripping unit 42 and the moving unit 50 constitute a conveyance unit 40. In other words, the conveyance unit 40 grips the strand S and conveys the strand S toward the strand cutter 56 (FIG. 1) described below. The timing at which the gripping unit 42 grips the strand S may be before, simultaneously with, or after the timing at which the moving unit 50 starts to move.

### (Upstream Cutter)

As illustrated in FIG. 3, the upstream cutter 16 is located on the downstream side in the Y direction relative to the die 28 and on the upstream side in the Y direction relative to a camera 132 described later. The upstream cutter 16 includes a blade portion 17 that is movable in the Z direction. The blade portion 17 can cut the strand S by moving in the Z direction with respect to the strand S. Note that the timing at which the upstream cutter 16 cuts the strand S includes, for example, the timing at which the operation of the extrusion unit 20 is checked in the preparation stage and the timing at which the manufacture of the pellets P is completed.

### <Strand Cutter>

As illustrated in FIG. 3, the strand cutter 56 is an example of a cutting unit that cuts the strand S conveyed by the movement of the gripping unit 42. The strand cutter 56 includes a main body 57, a strand receiving unit 58, and a rotary blade 59. The main body 57 is installed on the floor surface 2. The strand receiving unit 58 is provided on the upstream side of the main body 57 in the Y direction. The strand receiving unit 58 has an upper roller 58A and a lower roller 58B which are an example of a pair of rotating members.

The upper roller 58A and the lower roller 58B are each rotatably provided in the X direction as their axial direction. The upper roller 58A and the lower roller 58B pinch the strand S and convey the strand S while rotating. The rotary blade 59 is rotatably provided in the X direction as its axial direction inside the main body 57.

The rotational movement of the upper roller 58A and the lower roller 58B and the rotational movement of the rotary blade 59 are controlled by the control unit 30 (FIG. 2). The strand cutter 56 receives the strand S conveyed by the gripping unit 42 at the strand receiving unit 58. The strand cutter 56 then cuts the strand S by rotating the rotary blade 59. The strand S cut by the rotary blade 59 is discharged to the outside as multiple pellets P.

### <Cooling Unit>

As illustrated in FIG. 3, the cooling unit 60 is located between the extrusion unit 20 and the strand cutter 56, and cools the strand S. Specifically, the cooling unit 60 includes an upper cooling section 62 located above the strand S in the Z direction and a lower cooling section 72 located below the upper cooling section 62 in the Z direction.

### (Upper Cooling Section)

The upper cooling section 62 includes the upstream shower 64 and the downstream shower 66. The upstream shower 64 ejects water WT which is an example of a liquid. Also, the upstream shower 64 ejects the water WT toward a portion of the strand S located on the downstream side in the Y direction relative to a portion captured by the camera 132 described later and on the upstream side in the Y direction relative to a portion gripped by the gripping unit 42. In other words, the upstream shower 64 is an example of an upstream cooling section that is located between the extrusion unit 20 and the gripping unit 42 and configured to cool the strand S. The strand S becomes hard by being cooled by the water WT.

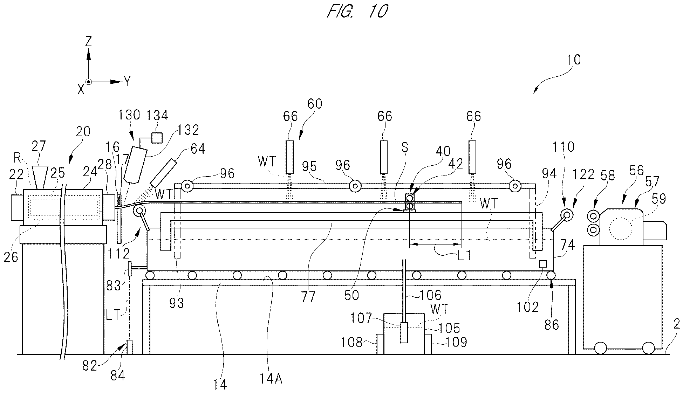

The downstream shower 66 is located on the downstream side in the Y direction relative to the upstream shower 64 and above the strand S in the Z direction. As an example, the downstream shower 66 is provided at three locations spaced apart in the Y direction. Furthermore, the downstream shower 66 can eject the water WT (FIG. 10) toward the strand S at multiple locations in the X direction.

### (Lower Cooling Section)

The lower cooling section 72 includes a water bath 74, an immersion roller 96, the water bath position detection unit 82, the water bath position changing unit 86, the roller lifting unit 92, the temperature measurement unit 102, and the temperature changing unit 104 (FIG. 2).

The water bath 74 is placed on the upper surface 14A via the water bath position changing unit 86. The water bath 74 has a rectangular bottom wall portion 75 whose dimension in the Y direction is larger than its dimension in the X direction and a side wall portion 76 that stands upright in the Z direction upward from the bottom wall portion 75. In other words, the water bath 74 is formed in a box shape having an opening on the upper side in the Z direction, and extends in the Y direction. The water bath 74 is an example of a container bath that contains the water WT. The support frame 77 extending in the Y direction is attached to the side wall portion 76. Furthermore, guide frames 93 and 94 described later are attached to the side wall portion 76.

The cooling water (water WT) flows from the downstream side to the upstream side in the movement direction of the strand S, and adjusts the water temperature such that the temperature on the upstream side becomes the set temperature.

### <Water Bath Position Detection Unit>

As illustrated in FIG. 3, the water bath position detection unit 82 is an example of a position detection unit. The water bath position detection unit 82 detects the position of the water bath 74 in the Y direction with respect to the position of the extrusion unit 20 in the Y direction. Specifically, the water bath position detection unit 82 includes a laser transmitter 83 and a laser receiver 84. The laser transmitter 83 is attached to the upstream end of the water bath 74 in the Y direction. The laser transmitter 83 emits a laser light LT downward in the Z direction.

The laser receiver 84 is fixed to the floor surface 2 such that the surface that receives the laser light LT is located at the upper end in the Z direction. When the laser receiver 84 receives (detects) the laser light LT, it is detected that the upstream end of the water bath 74 in the Y direction is located at the upstream end of the movable range in the Y direction. When the laser receiver 84 does not receive the laser light LT, it is determined that the water bath 74 is shifted on the downstream side in the Y direction. The position of the water bath 74 on the downstream side in the Y direction may be detected based on, for example, the amount of operation of the water bath position changing unit 86 described later.

Note that the bottom wall portion 75 is not necessarily located along the horizontal plane (X-Y plane). For this reason, an acceleration sensor may be provided in the water bath 74 as the water bath position detection unit 82. In other words, the inclination of the water bath 74 with respect to the horizontal plane may be measured based on the output of the acceleration sensor, and the position of the water bath 74 in the Y and Z directions may be detected. In this way, the detection of the position of the water bath 74 includes the detection of the angle of the water bath 74.

### <Water Bath Position Changing Unit>

As illustrated in FIG. 3, the water bath position changing unit 86 is an example of a position changing unit. The water bath position changing unit 86 is provided on the bottom wall portion 75 and placed on the upper surface 14A. The water bath position changing unit 86 changes the position of the water bath 74 in the Y direction based on the detection result of the position of the water bath 74 in the Y direction detected by the water bath position detection unit 82. The water bath position changing unit 86 includes, for example, an upstream drive roller 87A, a downstream drive roller 87B, and a plurality of driven rollers 87C. The operation of the water bath position changing unit 86 is controlled by the control unit 30 (FIG. 2).

When the upstream drive roller 87A is rotated, the water bath 74 is moved to the upstream side in the Y direction. When the downstream drive roller 87B is rotated, the water bath 74 is moved to the downstream side in the Y direction by a distance set in advance. The plurality of driven rollers 87C supports the water bath 74 so as to be movable in the Y direction.

### <Roller Lifting Unit>

As illustrated in FIG. 3, the roller lifting unit 92 includes the guide frames 93 and 94, a plurality of lifting frames 95, and a plurality of immersion rollers 96. The guide frames 93 and 94 are attached to the side wall portion 76 and extend in the Z direction. The lifting frame 95 extends in the Y direction. Both ends of the lifting frame 95 in the Y direction are supported by the guide frames 93 and 94. The guide frames 93 and 94 and the lifting frame 95 are configured as a linear actuator. That is, the lifting frame 95 can move upward and downward along the Z direction.

The plurality of immersion rollers 96 is an example of an immersion member, and each extends in the X direction as their axial direction. The plurality of immersion rollers 96 is disposed at intervals in the Y direction. Both ends of the plurality of immersion rollers 96 in the X direction are rotatably supported by the plurality of lifting frames 95. The plurality of immersion rollers 96 descends in accordance with the downward movement of the lifting frame 95, thereby coming into contact with the strand S and immersing the strand S in the water WT in the water bath 74. In this manner, the plurality of immersion rollers 96 is located between the extrusion unit 20 and the strand cutter 56 and configured to immerse the strand S in the water WT.

### <Temperature Measurement Unit>

As illustrated in FIG. 3, the temperature measurement unit 102 is provided in the water bath 74. The temperature measurement unit 102 measures the temperature of the water WT contained in the water bath 74. The measured temperature data is sent to the control unit 30 (FIG. 2).

### <Temperature Changing Unit>

As illustrated in FIG. 3, the temperature changing unit 104 includes a tank 105, a pipe 106, a pump 107, a heater 108, and a cooler 109. The water WT is stored inside the tank 105. The pipe 106 connects the inside of the tank 105 and the inside of the water bath 74. The pump 107 pumps up the water WT in the tank 105 and sends it to the pipe 106. The heater 108 is provided so as to be able to heat the water WT in the tank 105. The cooler 109 is provided so as to be able to cool the water WT in the tank 105.

The temperature changing unit 104 changes the temperature of the water WT based on a temperature T1 (FIG. 2) measured by the temperature measurement unit 102. For example, when a preset temperature range is a range from a temperature T2 to a temperature T3 (FIG. 2) and the temperature T1 is lower than the temperature T2, the temperature changing unit 104 heats the water WT by operating the heater 108. Also, when the temperature T1 is higher than the temperature T3, the temperature changing unit 104 cools the water WT by operating the cooler 109. In this way, the temperature of the water WT in the water bath 74 is changed (adjusted) by supplying the heated or cooled water WT to the water bath 74.

### <Support Unit>

As illustrated in FIG. 3, the support unit 110 is located between the extrusion unit 20 and the strand cutter 56, and supports the strand S. Specifically, the support unit 110 includes an upstream support section 112 and a downstream support section 122.

### (Upstream Support Section)

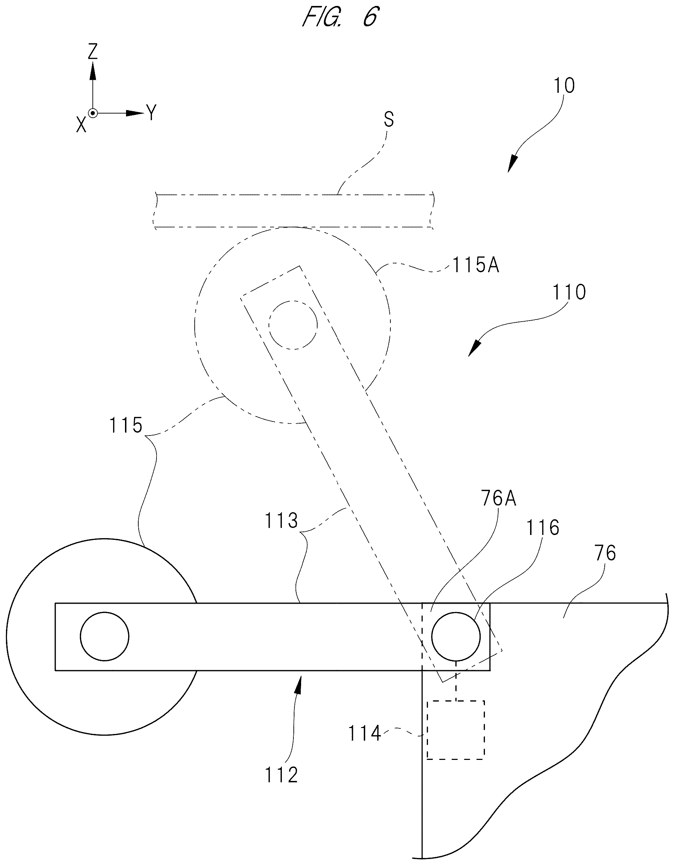

As illustrated in FIG. 6, the upstream support section 112 includes an arm member 113, an upstream drive unit 114, a support roller 115, and a connecting pin 116. The arm member 113 is a plate member having a rectangular shape when viewed in the X direction. Two arm members 113 are provided at an interval in the X direction, but FIG. 6 illustrates one arm member 113. One axial end of the arm member 113 is connected to a corner portion 76A by the connecting pin 116. The corner portion 76A is a portion located at the upstream end of the side wall portion 76 in the Y direction and at the upper end in the Z direction.

The upstream drive unit 114 includes a motor and gears, and rotates the arm member 113 around the connecting pin 116. In other words, the arm member 113 is an example of a displacement member, and is provided so as to be able to change its position with respect to the strand S. The support roller 115 is rotatably provided at the other end of the arm member 113 in the axial direction. The support roller 115 has an outer peripheral surface 115A. A part of the outer peripheral surface 115A comes into contact with the strand S, whereby the support roller 115 supports the strand S. Note that when it is not necessary to support the strand S, the arm member 113 is rotated downward in the Z direction, and the support roller 115 is retracted downward in the Z direction.

### (Downstream Support Section)

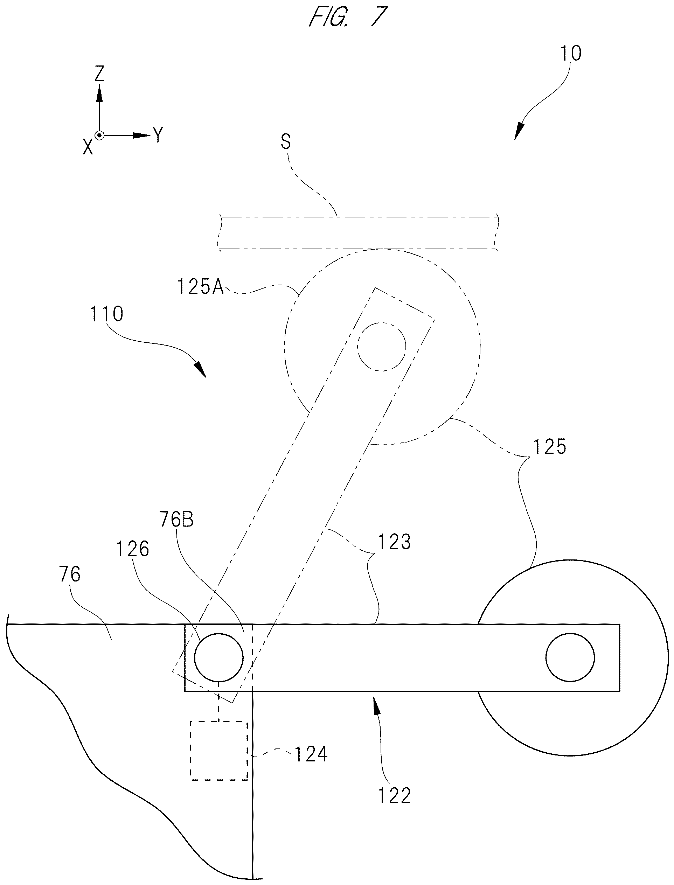

As illustrated in FIG. 7, the downstream support section 122 includes an arm member 123, a downstream drive unit 124, a support roller 125, and a connecting pin 126. The arm member 123 is a plate member having a rectangular shape when viewed in the X direction. Two arm members 123 are provided at an interval in the X direction, but FIG. 7 illustrates one arm member 123. One axial end of the arm member 123 is connected to a corner portion 76B by the connecting pin 126. The corner portion 76B is a portion located at the downstream end of the side wall portion 76 in the Y direction and at the upper end in the Z direction.

The downstream drive unit 124 includes a motor and gears, and rotates the arm member 123 around the connecting pin 126. In other words, the arm member 123 is an example of a displacement member, and is provided so as to be able to change its position with respect to the strand S. The support roller 125 is rotatably provided at the other end of the arm member 123 in the axial direction. The support roller 125 has an outer peripheral surface 125A. A part of the outer peripheral surface 125A comes into contact with the strand S, whereby the support roller 125 supports the strand S. Note that when it is not necessary to support the strand S, the arm member 123 is rotated downward in the Z direction, and the support roller 125 is retracted downward in the Z direction.

### <Measurement Unit>

The measurement unit 130 will be described with reference to FIG. 1, FIG. 2, and FIG. 4. The measurement unit 130 includes, for example, the camera 132 and a calculation unit 134. The measurement unit 130 measures the diameter W of the strand S in the X direction. Note that the calculation unit 134 may be incorporated in the control unit 30 (FIG. 2).

The camera 132 captures the strand S extruded from the die 28 from above in the Z direction. The image information acquired by the camera 132 is sent to the calculation unit 134. The calculation unit 134 has a CPU, a memory, and others similarly to the control unit 30. The calculation unit 134 then performs binarization processing on the image information to calculate the diameter W1 of the strand S1, the diameter W2 of the strand S2, and the diameter W3 of the strand S3. Furthermore, the calculation unit 134 calculates the average value of the diameter W1, the diameter W2, and the diameter W3. The calculated average value information is sent to the control unit 30.

The control unit 30 controls the moving speed of the moving unit 50 based on the diameter W of the strand S in the X direction measured by the measurement unit 130. Specifically, when the average value of the diameters W of the strands S in the X direction is smaller than a preset value, the control unit 30 performs control to reduce the moving speed of the moving unit 50. Also, when the average value of the diameters W of the strands S in the X direction is larger than the preset value, the control unit 30 performs control to increase the moving speed of the moving unit 50. When the average value and the preset value for the diameters W of the strands S in the X direction are approximately equal, the control unit 30 performs control to maintain the moving speed of the moving unit 50.

### [Function of Pellet Manufacturing Apparatus]

In the pellet manufacturing apparatus 10, after the start of the operation is selected on the operation panel 12 (FIG. 2), each process (step) described later is automatically performed until the stop of the operation is selected. Each process is performed by the CPU 32 reading the program from the memory 34, loading it, and executing it.

As illustrated in FIG. 8, in the pellet manufacturing apparatus 10, a preliminary extrusion process of the strand S is performed as a preparation stage before starting the manufacture. At this time, the water bath 74 is disposed close to the strand cutter 56. The gripping unit 42 is disposed at a position closest to the upstream support section 112 (start position). In this state, the extrusion unit 20 extrudes the molten resin R as the strand S. The extruded strand S is captured by the camera 132 and cooled by the upstream shower 64.

The control unit 30 performs image analysis (for example, analysis based on differences in color) based on the image information captured by the camera 132. This allows the control unit 30 to determine whether foreign matter (such as dust) is present in the strand S. When foreign matter is mixed in the strand S, the operation of the pellet manufacturing apparatus 10 is stopped, and a warning message is displayed on the operation panel 12 (FIG. 2). On the other hand, when no foreign matter is mixed in the strand S, extrusion of the strand S is stopped, and the extruded strand S is cut by the upstream cutter 16. The cut strand S falls and is then collected in a container. Thereafter, the process proceeds to the next step.

Note that "foreign matter" in the strand S refers to any object that may affect the operation of the strand cutter 56, and specifically refers to solid objects such as metal powder that may wear down the strand cutter 56. Gel-like objects and unmelted objects are not included in the "foreign matter" because there is no need to stop the extrusion of the strand S.

As illustrated in FIG. 9, the water bath position changing unit 86 operates to move the water bath 74 toward the upstream side in the Y direction. The water bath 74 stops moving when the laser receiver 84 receives the laser light LT. Subsequently, the molten resin R is extruded from the extrusion unit 20 as string-like strands S (an example of a step of extruding the strand S). At this time, the upstream drive unit 114 (FIG. 2) is driven, thereby causing the upstream support section 112 to support the strand S.

As illustrated in FIG. 5, the extruded strand S passes between the lower roller 47 and the upper roller 48, which is retracted upward, and advances to the downstream side in the Y direction. Here, when the length L1 (FIG. 10) of the portion of the strand S that extends (protrudes) to the downstream side from the gripping unit 42 reaches a preset length, the cam 49A is driven to rotate. As a result, the position of the upper roller 48 is lowered, so that the strand S is pinched between the roller pair 46 (an example of a step of gripping the strand S by the gripping unit 42).

Note that the force with which the gripping unit 42 grips the strand S is kept to the minimum force that allows the strand S to move to the downstream side in the Y direction. Therefore, even if the strand S is deformed by the action of the gripping unit 42, the deformed portion of the strand S is limited to the portion gripped by the gripping unit 42. In other words, the portion not gripped by the gripping unit 42 is less likely to be deformed.

As illustrated in FIG. 10, after the strand S is gripped by the gripping unit 42, the moving unit 50 moves the gripping unit 42 toward the strand cutter 56. At this time, a plurality of downstream showers 66 sprays the water WT onto the strand S, thereby cooling the strand S. In this manner, the strand S moved by the moving unit 50 is moved (conveyed) in a hardened state as compared with its state before cooling. The gripping unit 42 that has gripped the strand S is moved to the strand cutter 56 (an example of a step of conveying the strand S to the strand cutter 56 by moving the gripping unit 42 by the moving unit 50).

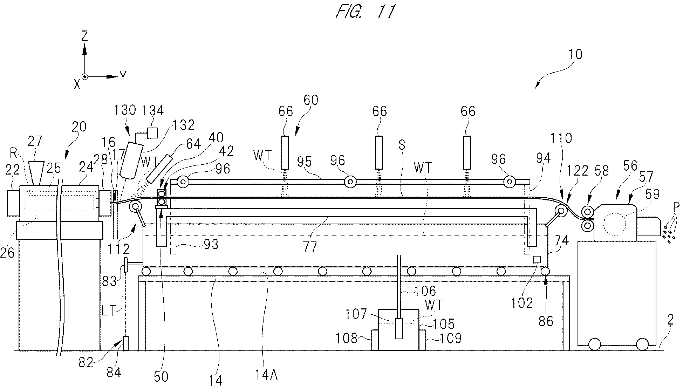

As illustrated in FIG. 11, at the timing when the gripping unit 42 reaches the downstream end of the guide rail 52 (FIG. 5) in the Y direction, the downstream drive unit 124 (FIG. 2) is driven, so that the downstream support section 122 supports the strand S. Then, the tip portion (downstream end) of the strand S enters the strand receiving unit 58 as the moving unit 50 moves. In this manner, the tip portion of the strand S is transferred to the strand receiving unit 58. When the tip portion of the strand S reaches the strand cutter 56, the conveyance of the strand S in the preparation process is completed.

As illustrated in FIG. 5, the upper roller 48 is moved upward in the Z direction before the plurality of immersion rollers 96 (FIG. 11) starts to descend. In other words, the nipped state of the strand S at the nip portion N is released. Then, the gripping unit 42 is moved by the moving unit 50 to the upstream end (start position) of the guide rail 52 in the Y direction.

As illustrated in FIG. 3, in the state where the strand S has been transferred to the strand receiving unit 58, the descending operation by the roller lifting unit 92 is performed. As a result, the strand S is immersed in the water WT in the water bath 74 by the plurality of immersion rollers 96 and cooled. Note that the operation of the plurality of downstream showers 66 is stopped. Then, the manufacturing process is started. Specifically, extrusion and conveyance of the strand S are resumed, and the strand S is cut by the strand cutter 56 (an example of a step of cutting the strand S by the strand cutter 56). As a result, a plurality of pellets P is formed. The plurality of formed pellets P is collected.

As described above, in the pellet manufacturing apparatus 10, the gripping unit 42 grips the strand S extruded from the extrusion unit 20 in the preparation stage before starting to manufacture the pellets P. The moving unit 50 moves the gripping unit 42. As a result, the strand S is automatically conveyed to the strand cutter 56. When the manufacture of the pellets P is started, the strand cutter 56 cuts the strand S to manufacture multiple pellets P. In this way, since the conveyance of the strand S to the strand cutter 56 is automated in the preparation stage before starting to manufacture the pellets P, the variation in the external force acting on the strand S is suppressed, so that the variation in the diameter W of the strand S can be suppressed.

In the pellet manufacturing apparatus 10, when there is a possibility that the tensile force acting on the strand S in the Y direction will be greater than necessary, the roller pair 46 is rotated in a driven manner, thereby reducing the frictional force acting on the surface where the roller pair 46 and the strand S come into contact. As a result, it is possible to prevent the tensile force acting on the strand S from becoming greater than necessary.

In the pellet manufacturing apparatus 10, the cooling unit 60 cools the strand S, which promotes hardening of the strand S. As a result, it is possible to prevent the strand S from deforming during conveyance.

In the pellet manufacturing apparatus 10, the cooling unit 60 includes the upstream shower 64. Therefore, it is possible to harden the strand S, which is at a relatively high temperature immediately after being extruded from the extrusion unit 20, by cooling with the upstream shower 64, whereby the deformation of the strand S during conveyance can be suppressed.

In the pellet manufacturing apparatus 10, the strand S is immersed in the water WT in the water bath 74 between the extrusion unit 20 and the strand cutter 56. The temperature of the immersed strand S is reduced by heat exchange with the water WT. Accordingly, it is possible to cool the strand S in a shorter time as compared with the strand S cooled with air.

In the pellet manufacturing apparatus 10, the water bath position detection unit 82 detects the position of the water bath 74 with respect to the position of the extrusion unit 20. The water bath position changing unit 86 then changes the position of the water bath 74 based on the detection result of the position of the water bath 74 detected by the water bath position detection unit 82. For example, when the position of the water bath 74 is too far away from the position of the extrusion unit 20, the water bath 74 is moved closer to the extrusion unit 20. When the position of the water bath 74 is too close to the position of the extrusion unit 20, the water bath 74 is moved away from the extrusion unit 20. In this way, the distance between the extrusion unit 20 and the water bath 74 can be automatically managed.

In the pellet manufacturing apparatus 10, the temperature changing unit 104 changes the temperature of the water WT based on the temperature measured by the temperature measurement unit 102. For example, when the temperature of the water WT increases due to a change in the temperature of the environment in which the pellet manufacturing apparatus 10 is installed, the temperature of the water WT can be lowered using the cooler 109. When the temperature of the water WT decreases, the temperature of the water WT can be raised using the heater 26. In this way, it is possible to manage the temperature of the water WT.

In the pellet manufacturing apparatus 10, the support unit 110 supports the strand S between the extrusion unit 20 and the strand cutter 56. This makes it possible to suppress the strand S being conveyed toward the strand cutter 56 from being deformed during conveyance.

In the pellet manufacturing apparatus 10, when the positions of the arm members 113 and 123 in the Y and Z directions are changed with respect to the strand S such that the support unit 110 can support the strand S, the support rollers 115 and 125 come into contact with the strand S. Here, it is assumed that the positions of the arm members 113 and 123 continue to be changed even after the support rollers 115 and 125 come into contact with the strand S. In this case, the contact positions of the support rollers 115 and 125 with the strand S change in the circumferential direction as they rotate. Accordingly, the frictional force acting on the strand S can be kept low as compared with a configuration in which the support rollers 115 and 125 do not rotate, so that it is possible to suppress the strand S from being pulled by the support unit 110.

In the pellet manufacturing apparatus 10, the measurement unit 130 measures the diameter W of the strand S in the X direction. The control unit 30 controls the rotation speed of the strand cutter 56 (upper roller 58A, lower roller 58B (FIG. 3)) based on the diameter W of the strand S in the X direction measured by the measurement unit 130. For example, when the diameter W of the strand S in the X direction is smaller than a preset diameter, the control unit 30 reduces the rotation speed of the upper roller 58A and lower roller 58B. As a result, the tension acting in the conveyance direction of the strand S decreases, so that the diameter of the strand S in the X direction approaches the set diameter.

On the other hand, when the diameter W of the strand S in the X direction is larger than the set diameter, the control unit 30 increases the rotation speed of the upper roller 58A and the lower roller 58B. As a result, the tension acting in the Y direction which is the conveyance direction of the strand S increases, so that the diameter W of the strand S in the X direction approaches the set diameter (the diameter W becomes smaller). In this way, the diameter W of the strand S in the X direction can be brought closer to the set diameter.

In the pellet manufacturing method of this embodiment, in the preparation stage before starting to manufacture the pellets P, the gripping unit 42 grips the strand S extruded from the extrusion unit 20. The moving unit 50 moves the gripping unit 42. As a result, the strand S is automatically conveyed to the strand cutter 56. When the manufacture is started, the strand cutter 56 cuts the strand S to manufacture multiple pellets P. In this way, since the conveyance of the strand S to the strand cutter 56 is automated in the preparation stage before starting to manufacture the pellets P, the variation in the external force acting on the strand S is suppressed, so that the variation in the diameter W of the strand S can be suppressed.

In the pellet manufacturing apparatus 10 or the pellet manufacturing method of this embodiment, the conveyance of the strand S to the strand cutter 56 is automated in the preparation stage before starting to manufacture the pellets P. Accordingly, it is possible to optimize the operating conditions and improve the quality of the pellets P as compared with a configuration in which a skilled operator manually adjusts the operating conditions of the apparatus after observing the resin temperature and the discharge state of the strand from the strand die. Since it is possible to optimize the operating conditions, the generation of waste in the early stage of forming the strand S can be suppressed. Since it is possible to improve the quality of the pellets P, even a low-viscosity resin can be formed into a strand.

It goes without saying that this disclosure is not limited to the above-described embodiment, and may be implemented in various different forms within the scope of its technical idea. Hereinafter, various modifications of the pellet manufacturing apparatus 10 of this embodiment will be described. Components similar to those of the pellet manufacturing apparatus 10 are denoted by the same reference numerals and descriptions thereof will be omitted.

### <First Modification>

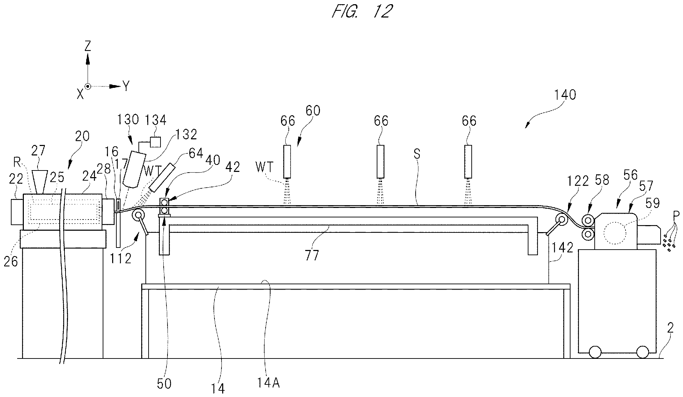

FIG. 12 illustrates a pellet manufacturing apparatus 140. The pellet manufacturing apparatus 140 includes a base 142 instead of the water bath 74 and the water bath position changing unit 86 (FIG. 1). In other words, the pellet manufacturing apparatus 140 is an apparatus in which the strand S is not immersed in the water WT. The strand S extruded from the extrusion unit 20 is cooled by the water WT of the upstream shower 64, and then moved to the strand cutter 56 by the moving unit 50 while being gripped by the gripping unit 42. The strand S is further cooled by receiving the water WT of the downstream shower 66 while being moved by the moving unit 50. As a result, the strand S reaches the strand cutter 56 in a hardened state, so that deformation of the strand S can be suppressed in the preparation stage before manufacture. In other words, as in the pellet manufacturing apparatus 10 (FIG. 1), it is possible to suppress the variation in the diameter W of the strand S in the preparation stage before starting to manufacture the pellets P. After the start of manufacture, the strand S is cut by the strand cutter 56, thereby manufacturing the pellets P. As described above, the pellet manufacturing apparatus 140 without the water bath 74 may be used.

### <Second Modification>

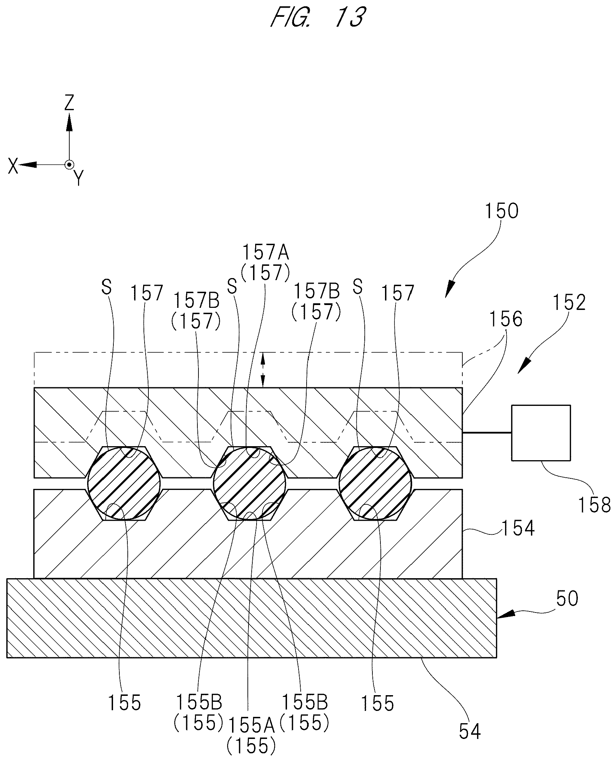

FIG. 13 illustrates a conveyance unit 150. The conveyance unit 150 is provided in place of the conveyance unit 40 (FIG. 1) of the pellet manufacturing apparatus 10. The conveyance unit 150 includes a gripping unit 152 and the moving unit 50. The gripping unit 152 includes a support block 154, a movable block 156, and a block drive unit 158. The block drive unit 158 includes a motor and gears. The operation of the block drive unit 158 is controlled by the control unit 30 (FIG. 2).

The support block 154 is fixed to the carriage 54. A plurality of grooves 155 is formed in the support block 154. The grooves 155 are open toward the upper side in the Z direction and extend in the Y direction. When viewed in the Y direction, the grooves 155 are formed in an inverted trapezoidal shape with one bottom surface 155A and two inclined surfaces 155B.

The movable block 156 is located above the support block 154 in the Z direction. The movable block 156 can move upward and downward in the Z direction by the block drive unit 158. A plurality of grooves 157 is formed in the movable block 156. The grooves 157 are open toward the lower side in the Z direction and extend in the Y direction. When viewed in the Y direction, the grooves 157 are formed in a trapezoidal shape with one bottom surface 157A and two inclined surfaces 157B.

The strand S extruded from the extrusion unit 20 (FIG. 1) enters the plurality of grooves 155 and is supported by the support block 154. Then, as the movable block 156 moves downward, the strand S is pinched by the bottom surface 155A, the inclined surfaces 155B, the bottom surface 157A, and the inclined surfaces 157B. In other words, the strand S is gripped by the gripping unit 152. The gripped strand S is moved in the Y direction by the moving unit 50. In this way, the gripping unit 152 may have a configuration in which the strand S is gripped by a nonrotating clip-shaped member.

### <Other Modifications>

The pellet manufacturing apparatuses 10 and 140 are not necessarily provided with the downstream shower 66. Furthermore, when the hardened state of the strand S extruded from the extrusion unit 20 is such that the strand S can be moved (conveyed), the upstream shower 64 is not necessarily provided. The water bath 74 of the pellet manufacturing apparatuses 10 and 140 may be fixed, and the pellet manufacturing apparatuses 10 and 140 are not necessarily provided with the water bath position detection unit 82 and the water bath position changing unit 86. The cooling unit 60 is not necessarily provided with the temperature measurement unit 102 and the temperature changing unit 104. In other words, the temperature of the water WT in the water bath 74 is not necessarily changed.

The pellet manufacturing apparatuses 10 and 140 are not necessarily provided with the support unit 110. The support unit 110 is not necessarily provided with the arm members 113 and 123 and the support rollers 115 and 125. For example, a pad that can move in the Z direction or a direction intersecting the Z direction may be provided, and the position of the strand S may be changed by changing the position of the pad. The moving unit 50 may be moved at a preset speed without providing the measurement unit 130. The cutting unit is not limited to one having a rotary blade 59 like the strand cutter 56, but may have a blade that moves upward and downward in the Z direction.

### REFERENCE SIGNS LIST

2 floor surface, 10 pellet manufacturing apparatus, 12 operation panel, 14 pedestal, 14A upper surface, 16 upstream cutter, 17 blade portion, 20 extrusion unit, 22 drive unit, 24 cylinder, 25 screw, 26 heater, 27 inlet unit, 28 die, 28A through hole, 30 control unit, 33 bus, 34 memory, 40 conveyance unit, 42 gripping unit, 44 support frame, 44A vertical wall portion, 45A bearing, 45B bearing, 46 roller pair, 47 lower roller, 47A outer peripheral surface, 48 upper roller, 48A outer peripheral surface, 49 bearing drive unit, 49A cam, 49B motor, 50 moving unit, 52 guide rail, 54 carriage, 56 strand cutter, 57 main body, 58 strand receiving unit, 58A upper roller, 58B lower roller, 59 rotary blade, 60 cooling unit, 62 upper cooling section, 64 upstream shower, 66 downstream shower, 72 lower cooling section, 74 water bath, 75 bottom wall portion, 76 side wall portion, 76A corner portion, 76B corner portion, 77 support frame, 82 water bath position detection unit, 83 laser transmitter, 84 laser receiver, 86 water bath position changing unit, 87A upstream drive roller, 87B downstream drive roller, 87C driven roller, 92 roller lifting unit, 93 guide frame, 94 guide frame, 95 lifting frame, 96 immersion roller, 102 temperature measurement unit, 104 temperature changing unit, 105 tank, 106 pipe, 107 pump, 108 heater, 109 cooler, 110 support unit, 112 upstream support section, 113 arm member, 114 upstream drive unit, 115 support roller, 115A outer peripheral surface, 116 connecting pin, 122 downstream support section, 123 arm member, 124 downstream drive unit, 125 support roller, 125A outer peripheral surface, 126 connecting pin, 130 measurement unit, 132 camera, 134 calculation unit, 140 pellet manufacturing apparatus, 142 base, 150 conveyance unit, 152 gripping unit, 154 support block, 155 groove, 155A bottom surface, 155B inclined surface, 156 movable block, 157 groove, 157A bottom surface, 157B inclined surface, 158 block drive unit, d nip distance, d1 distance, d2 distance, L1 length, LT laser light, N nip portion, P pellet, R molten resin, S strand, S1 strand, S2 strand, S3 strand, T1 temperature, T2 temperature, T3 temperature, W1 diameter, W2 diameter, W3 diameter, WT water

## Claims

1. A pellet manufacturing apparatus comprising:
an extrusion unit configured to extrude a molten resin material as a string-like strand;
a gripping unit configured to grip the strand extruded from the extrusion unit;
a moving unit configured to move the gripping unit; and
a cutting unit configured to cut the strand conveyed by movement of the gripping unit.

2. The pellet manufacturing apparatus according to claim 1,
wherein the gripping unit includes a roller pair rotatably provided and configured to pinch the strand.

3. The pellet manufacturing apparatus according to claim 1, further comprising a cooling unit located between the extrusion unit and the cutting unit and configured to cool the strand.

4. The pellet manufacturing apparatus according to claim 3,
wherein the cooling unit includes an upstream cooling section located between the extrusion unit and the gripping unit and configured to cool the strand.

5. The pellet manufacturing apparatus according to claim 3,
wherein the cooling unit includes:
a container bath configured to contain a liquid; and
an immersion member located between the extrusion unit and the cutting unit and configured to immerse the strand in the liquid.

6. The pellet manufacturing apparatus according to claim 5, further comprising:
a position detection unit configured to detect a position of the container bath with respect to a position of the extrusion unit; and
a position changing unit configured to change the position of the container bath based on a detection result of the position of the container bath detected by the position detection unit.

7. The pellet manufacturing apparatus according to claim 5,
wherein the cooling unit includes:
a temperature measurement unit configured to measure a temperature of the liquid; and
a temperature changing unit configured to change the temperature of the liquid based on the temperature measured by the temperature measurement unit.

8. The pellet manufacturing apparatus according to claim 1, further comprising a support unit located between the extrusion unit and the cutting unit and configured to support the strand.

9. The pellet manufacturing apparatus according to claim 8,
wherein the support unit includes:
a displacement member provided so as to be able to change its position with respect to the strand; and
a support roller rotatably provided on the displacement member and configured to support the strand.

10. The pellet manufacturing apparatus according to any one of claims 1 to 9,
wherein the cutting unit includes a pair of rotating members configured to pinch the strand and convey the strand while rotating,
the pellet manufacturing apparatus further comprising:
a measurement unit configured to measure a diameter of the strand in a crossing direction intersecting a conveyance direction of the strand; and
a control unit configured to control a rotation speed of the pair of rotating members based on the diameter of the strand measured by the measurement unit.

11. A pellet manufacturing method comprising:
(a) a step of extruding a molten resin material as a string-like strand from an extrusion unit;
(b) a step of gripping the strand extruded from the extrusion unit by a gripping unit;
(c) a step of conveying the strand to a cutting unit by moving the gripping unit by a moving unit; and
(d) a step of cutting the strand by the cutting unit.
